# EUROPÄISCHE PATENTSCHRIFT

(11) **EP 3 393 667 B1**
(45) Veröffentlichungstag und Bekanntmachung des Hinweises auf die Patenterteilung: **04.03.2020**
(21) Anmeldenummer: 16836226.7
(22) Anmeldetag: 15.12.2016
(51) Int. Cl.: B02C 2/00, B02C 2/04

(54) **ZERKLEINERUNGSMASCHINE MIT RADARGESTÜTZTER VERSCHLEISSMESSUNG**
COMMINUTING MACHINE WITH RADAR-ASSISTED WEAR MEASUREMENT FUNCTION
MACHINE DE DÉSINTÉGRATION À MESURE D'USURE PAR RADAR

(30) Priorität: 21.12.2015 DE 102015122372
(43) Veröffentlichungstag der Anmeldung: 31.10.2018
(73) Patentinhaber: thyssenkrupp AG, 45143 Essen (DE); thyssenkrupp Industrial Solutions AG, 45143 Essen (DE)
(72) Erfinder: SUDMANN, David, 48153 Münster (DE); BISCHOF, Timo, 48155 Münster (DE); WINKEL, Reik, 52070 Aachen (DE); RABEL, Matthias, 89075 Ulm (DE)
(74) Vertreter: thyssenkrupp Intellectual Property GmbH
(86) Internationale Anmeldenummer: PCT/DE2016/100589
(87) Internationale Veröffentlichungsnummer: WO 2017/108025

(56) Entgegenhaltungen:
- WO-A1-2014/187824
- US-A- 3 944 146

## Beschreibung

Die Erfindung betrifft eine Zerkleinerungsmaschine wie Brecher, Mühle oder dergleichen, bei welcher das zu zerkleinernde Material durch einen zwischen wenigstens einer auf einen Bestandteil der Zerkleinerungsmaschine aufgebrachten Verschleißschicht und einer Gegenfläche ausgebildeten und mit fortschreitendem Verschleiß der wenigstens einen Verschleißschicht in seiner Erstreckung variierenden Spalt geführt ist. Derartige Zerkleinerungsmaschinen sind insbesondere zur Zerkleinerung von Rohstoffen, sogenannten minerals, und hier insbesondere zum Einsatz im Bergbau oder in der Zementindustric vorgesehen.

Soweit als Anwendungsbeispiel für die Erfindung ein Kreiselbrecher gelten kann, ist ein solcher Kreiselbrecher in der DE 198 53 900 A1 beschrieben. Der Kreiselbrecher besteht aus einem äußeren Brechergehäuse, das innenseitig mit aus einer Verschleißschicht bestehenden Brechbacken (Brechmantel) ausgekleidet ist. In dem von den Brechbacken umschlossenen Zerkleinerungsraum des Kreiselbrechers ist eine einen Brechkegel tragende Achse angeordnet, die von einem Antrieb in eine Taumelbewegung versetzt wird, wobei am unteren Ende des konischen Brechkegels zwischen einer auf dessen Außenseite ebenfalls angebrachten Verschleißschicht und der gehäuseseitigen, die Brechbacken bildenden Verschleißschicht ein Spalt ausgebildet ist, der die Endkorngröße des mit dem Krciselbrecher zu zerkleinernden Materials festlegt. Im Rahmen dieser Zerkleinerung tritt an den Verschleißschichten von Brechbacken und Brechkegel ein fortdauernder Verschleiß ein, der in Zeitintervallen einen Wechsel der jeweiligen Verschleißschicht erforderlich macht, wobei es während der Standzeit der Verschleißschichten im Betrieb des Kreiselbrechers zusätzlich auch zu einer Veränderung in der Abmessung des Brechspaltes kommt.

In der vorgenannten DE 198 53 900 A1 ist für einen derartigen Kreiselbrecher ein Verfahren zur Einstellung des Brechspaltes angegeben, zu dessen Durchführung in das Innere des Gehäuses ein Sensor eingebracht wird, der ein Boroskop aufweist und als mit einer Fernsehkamera verbundenes Endoskop ausgebildet ist, und mittels dessen der Bereich des Brechspaltes mittels der Fernsehkamera erfasst und auf einem Bildschirm sichtbar gemacht wird. Aufgrund eines Vergleichs der jeweils gemessenen Werte für den Brechspalt mit den im Neuzustand des Kreiselbrechers festgestellten Werten kann der jeweils eingetretene Verschleiß ermittelt werden. Mit dem bekannten Kreiselbrecher und dem daran angewendeten Verfahren ist noch der Nachteil verbunden, dass die aus Boroskop. Endoskop, Fernsehkamera und Bildschirm bestehende Messeinheit aufwendig und in ihrem Einsatz schwierig zu handhaben ist. Es ist dabei insbesondere aufwendig, zur Durchführung einer Messung jeweils den Sensor in das Innere des Gehäuses einzufahren und dort jeweils so zu positionieren, dass wiederholbare Messungen mit vergleichbaren Werten durchgeführt werden können. Gleichzeitig ist der weitere Nachteil gegeben, dass der Materialstrom des zu zerkleinernden Materials unterbrochen werden und der Brecher vollständig entleert sein muss. Somit sind entsprechende Rüstzeiten für die Durchführung jeder Messung unvermeidlich.

Weiterhin ist aus der US 3,944,146 A bei einem Kreiselbrecher der Einsatz der Ultraschalltechnik zur Kontrolle des Brechspaltes wie auch zur Bestimmung des an der innenseitigen Verschleißschicht eintretenden Verschleißes bekannt. Die Messanordnung umfasst zwei Ultraschallköpfe, von denen einer im Bereich des Brechspaltes in dem Brechergehäuse außerhalb der daran angebrachten Verschleißschicht angeordnet ist und der andere im Bereich des unteren Fußes des Brechergehäuses, wobei dem letzteren Ultraschallkopf eine an dem Kolben einer Hydraulikzylinderanordnung zur Verstellung des Brecherkegels im Brechergehäuse angeordnete Reflektionsfläche zugeordnet ist. Beide 1)Itraschatiköpfe sind mit einer Ultraschallmesseinheit sowie mit einem Oszilloskop zur Darstellung der Signalpiks verbunden. Der im Bereich des Brechspaltes angeordnete Ultraschallkopf dient der unmittelbaren Feststel. lung der jeweiligen Dicke der Verschleißschicht. soweit das von dem Ultraschallkopf ausgesandte Signal an der äußeren Fläche der Verschleißschicht reflektiert und die Laufzeit in ein Verhältnis zu der für den Neuzustand der Verschleißschichl geltenden Laufzeit gesetzt wird. Soweit die von diesem Ultraschallmesskopf ausgehenden Schallwellen nach Durchdringen der Verschleißschicht auf die gegenüberliegende Fläche des Brechkegels treffen, ist daraus die Ausdehnung des Brechspaltes ableitbar. Da diese Brechspaltbestimmung während des Betriebs des Kreiselbrechers wegen des durch den Brechspalt laufenden Materials nicht möglich ist, ist gemäß der US 3,944,146 A zur fortlaufenden BrechspaltUberwachung die Einbeziehung der zweiten, am Fuße des Brechergehäuses angeordneten Ultraschallmessanordnung vorgeschlagen, wobei auf der Basis der Ergebnisse beider Ultraschalimessvorrichtungen die Ausdehnung des Brechspaltes während des Betriebs des Kreiselbrcchers mathematisch bestimmt und dadurch überwacht wird. Mit dem bekannten Kreiselbrecher ist im Wesentlichen der Nachteil verbunden, dass der Einsatz der Ultraschaiimesstechnik bei Zerkleinerungsmaschinen, und insbesondere bei Brechern, problematisch ist, weil der Ultraschall durch die beim Brechen auftretenden Betriebs- und Zerkleinerungsgeräusche gestört wird, soweit die verwendeten Frequenzen durch das durch die Geräusche bedingte Rauschen Überlagert werden.

Der Erfindung liegt daher die Aufgabe zugrunde, eine Zerkleinerungsmaschine der eingangs genannten Art derart auszurüsten, dass mittels einer einfacher aufgebauten Messanordnung ohne wesentliche Rüstzeiten eine genaue Verschleiß- und Spaitbestimmung durchgeführt werden kann. sowie ein Auswerteverfahren zur Bestimmung des eingetretenen Verschleißes und des jeweils bestehenden Spaltes anzugeben.

Die Lösung dieser Aufgaben ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, das zur Bestimmung des an der Verschleißschicht eintretenden Verschleißes und/oder zur Bestimmung der jeweils geltenden Erstreckung des Spaltes zwischen Verschleißschicht und Gegenfläche eine Radarantenne angeordnet ist, wobei die Radarantenne einen Antennenbereich und ein mindestens dem für einen zulässigen Verschleiß vorgesehenen Bereich der Verschleißschicht zugeordnetes und sich mit dem Verschleiß der Verschleißschicht jeweils verkürzendes Verschleißteil umfasst.

Die Erfindung ermöglicht somit bei der Verschleißbestimmung den Einsatz der Radartechnik, für die robuste, präzise und leistungsfähige Messgeräte zur Verfügung stehen. Die Besonderheit der Erfindung besteht in dem Einsatz einer ortsfest in die aus Verschleißmaterial bestehende Verschleißschicht eingebetteten Radarantenne, deren Erstreckung sich mit fortlaufendem Verschleiß der Verschleißschicht verkürzt, so dass zu jeder Zeit und in jedem Betriebszustand unter Heranziehung der bei jedem Materialweehsel eintretenden Reflektion von Radarstrahlen (Epsilon R Wert) eine unmittelbare Bestimmung der Restdicke der Verschleißschicht und über die Bestimmung des Abstandes zwischen dem jeweils in der äußeren Verschleißflüche der Verschleißschicht liegenden Ende der Radarantenne und der gegenüberliegenden Gegenflüche der Zerkleinerungsmaschine die Bestimmung des Spaltes zwischen Verschleißschicht und Gegenfläche möglich ist. Zusätzlich lässt sich aufgrund der gemessenen Werte auch ein an der Gegenfläche eingetretener Verschleiß bestimmen, sofern auf diese Gegenfläche eine Verschleißschicht aufgebracht ist. Dabei besteht die Radarantenne aus einem Antennenbereich mit einer an sich bekannten Ausbildung und einem daran angesetzten Verschleißteil, dessen Länge mindestens so groß ausgelegt ist wie die Erstreckung bzw. Dicke desjenigen Abschnitts der Verschleißschicht, der in zulässiger Weise für einen Verschleiß vor einem notwendigen Wechsel der Verschleißschicht vorgesehen ist. Dies bedeutet, dass das Verschleißteil der erfindungsgemäßen Radarantenne auch eine größere Länge als die Dicke des zugelassenen Verschlcißbereichs der Verschleißschicht aufweisen kann, sich also auch über die gesamte Stärke der auf dem entsprechenden Bestandteil der Zerkleinerungsmaschine aufgebrachten Verschleißschicht erstrecken kann. Unter dem Begriff der einer Radarantenne zuzuordnenden Messkeule ist allgemein der Ausbreitungsbereich der von der Radarantenne ausgehenden Radarwellen zu verstehen.

insoweit ist mit der Erfindung der Vorteil verbunden, dass keine besonderen Rüstzeiten für die Durchführung der Messungen anfallen, da die einzelnen Bestandteile der Radarmcsstechnik an der Zerkleinerungsmaschine fest eingebaut sind. Somit ermöglicht die Erfindung im Vergleich mit der aus der US 3,944,146 A bekannten Ultraschallmesstechnik deutlich schnellere sowie während des laufenden Betriebs durchzuführende Messungen, wobei die Wahrscheinlichkeit höher sein dürfte, dass der Messbereich zum Zeitpunkt der Messung frei von dem zu zerkleinernden Material ist. Des Weiteren erlaubt der Einsatz der Radarantenne im Vergleich mit dem Einsatz von Ultraschall einen fokussierteren Messstrahl sowie ein saubereres Ausbreitungsverhalten.

Die Erfindung lässt sich dabei nicht nur für einen beispielhaft herangezogenen Kreiselbrecher. sondern auch auf andere Brecherbauarten wie u.a. Backenbrecher oder Walzenbrecher sowie auf weitere Zerkleinerungsgeräte wie Mühlen und dergleichen anwenden, soweit es bei den Zerkleinerungsmaschinen auf die Erfassung des Verschleißzustandes einer Gehäuseauskleidung bzw. auf die Bestimmung der Spaltweite eines zwischen der Gehäuseauskleidung und einem Zerkleinerungswerkzeug bestehenden Spaltes ankommt.

Soweit dafür Sorge getragen sein muss, dass durch die Einschaltung des an den Antennenbereich anschließenden zusätzlichen Verschleißteils bedingte, ein Messergebnis verfälschende Reflektionen oder Verluste an Radarwellen entstehen, ist nach einem Ausführungsbeispiel der Erfindung vorgesehen, dass das Verschleißteil der Radarantenne verglichen mit der konischen Gestalt des Antennenbereichs eine sich geringfügig in Richtung auf die Gegenfläche erweiternde Konizität aufweist und derart ausgestattet ist, dass beim Durchgang der Radarwellen durch das Verschleißteil die Antennenrichtwirkung erhalten bleibt und höhere Moden, also andere Moden als die Grundmoden, verhindert werden. Vorzugsweise ist dabei das Verschleißteil aus vergleichbar verschleißfestem Material wie die Verschleißschicht ausgebildet, welches jedoch für Radar geeignete dielektrische Eigenschaften aufweist. Als bevorzugtes Material ist hier eine entsprechende Eigenschaften aufweisende Keramik zu nennen.

Nach Ausführungsbeispielen der Erfindung ist der Antennenbereich der Radarantenne als Hornantenne ausgebildet, wobei vorzugsweise eine mit einem geeignete dielektrische Eigenschaften aufweisenden Material, beispielsweise einer geeigneten Keramik, gefüllte Hornantenne zum Einsatz kommt. Derartige Hornantennen sind in der Radartechnik allgemein bekannt. Der Einsatz einer gefüllten Hornantenne ist zudem gegenüber einer in der Radartechnik verbreiteteren offenen Hornantenne, die sich bei Einsatz in einer Zerkleinerungsmaschine mit Brechgut unterschiedlichster Konsistenz leicht zusetzen würde, vorteilhaft.

Im Einzelnen kann vorgesehen sein, dass die einzelnen Komponenten von Antennenbereich und Verschleißteil jeweils miteinander verklebt, verlötet oder zementiert sind.

Alternativ kann vorgesehen sein, dass die einzelnen Komponenten von Antennenbereich und Verschleißteil gegeneinander beweglich angeordnet sind. Diese Ausführungsform trägt gegebenenfalls dem Umstand Rechnung, dass sich Komponenten der Radarantenne im Betrieb der Zerkleinerungsmaschine erwärmen könnten, wobei unterschiedliche Ausdehnungskoeffizienten der Materialien zu berücksichtigen wären. Konkret könnte beispielsweise eine Gleitlagerung der Komponenten an Zwischenstegen oder auch eine Anordnung im Rahmen eines eine Schichtgleitung ermöglichenden, aus unterschiedlichen Materialien bestehenden Verbundsystems vorgesehen sein.

Nach einem Ausführungsbeispiel der Erfindung ist vorgesehen, dass die Radarantenne in einem in die Verschkißschicht eingebetteten, mit dem Abtrag der Verschleißschicht verschleißenden Schutzrohr untergebracht ist.

Nach einem Ausfdhrungsbeispiel der Erfindung ist vorgesehen, dass die Radarantenne mittels eines daran angeschlossenen Wellenleiters an einen Radarsensor angeschlossen ist, wobei vorgesehen sein kann, dass der Radarsensor außerhalb des Zerkleinerungsraumes der Zerkleinerungsmaschine angeordnet ist.

Soweit Zerkleinerungsmaschinen dickwandige Gehäuse aufweisen oder die entsprechende Radarantenne nur in einem solchen dickwandigen Bereich eines Gehäuses anzuordnen ist, kann vorgesehen sein, dass zwischen einem an der Radarantenne ausgebildeten Flansch und dem Radarsensor eine Wellenleiterverlängerung angeordnet ist. Als zusätzliche Wellenleiterverlängerung kann insbesondere ein aus dem Stand der Technik bekannter Hohlleiler Verwendung finden.

Soweit zwischen der Wellenleiterverlängurung und dem Antennenbereich der Radarantenne ein Übergang der Radarwellen zwischen zwei unterschiedlichen Medien vorliegt, kann zur Erzeugung eines entsprechend weichen Obergangs der Radarwellen vorgesehen sein, dass ein aus einem zur Entspiegelung geeigneten Übergangsmaterial bestehender Übergangsbereich angeordnet ist.

Nach einem Ausführungsbeispiel der Erfindung ist vorgesehen, dass die Radarantenne vollständig in die Verschleißschicht eingebettet ist, Alternativ kann aber auch vorgesehen sein, dass die Zuordnung der Radarantenne zur Verschleißschicht dergestalt ist, dass die Radarantenne an einem freien Ende der Verschleißschicht, dieser unmittelbar benachbart, also beispielsweise am unteren Ende der Verschleißschicht, angeordnet ist.

Schließlich kann nach einem Ausführungsbeispiel der Erfindung vorgesehen sein, dass in der Verschleißschicht und/oder einem Gehäuseteil kanalartige Aussparungen zur Aufnahme der Radarantenne und/oder der Wellenleiterverlängerung angeordnet sind, so dass die entsprechenden Bestandteile der Zerkleinerungsmaschine bei der Fertigung werkseitig für den Einsatz der erfindungsgemäßen Radarantenne vorbereitet sind. Gegebenenfalls kann insbesondere eine in die Verschleißschicht eingebettete Radarantenne bei dem Gießen der Verschleißschicht integriert bzw. eingebettet werden. Dabei ist auch in Betracht zu ziehen, ebenfalls den Radarsensor in einer entsprechenden Aussparung unterzubringen.

Soweit die entsprechend den vorstehend erläuterten Merkmalen ausgebildete Zerkleinerungsmaschine entsprechende Messwerte für die Laufzeit von in die in den Aufbau der Zerkleinerungsmaschine integrierten Radarantenne eingespeisten Radarwellen liefert, ist zur Auswertung dieser Messwerte im Hinblick auf die Bestimmung des an der Verschleißschicht eingetretenen Verschleißes vorgesehen, dass in einer Auswerteeinheit die Laufzeitdifferenz der in die aus Antennenbereich und Verschleißteil bestehende Radarantenne eingespeisten Radarwellen zwischen deren Eintritt in den Antennenbereich und deren Austritt aus dem Verschleißteil bestimmt und in ein Verhältnis zu der im Neuzustand der Zerkleinerungsmaschine vorgegebenen Länge von unverändert bleibendem Antennenbereich und dem einem Verschleiß unterliegenden Verschleißteil gesetzt und daraus der zum Zeitpunkt der Messung jeweils eingetretene Verschleiß der Verschleißschicht bestimmt wird.

In einer Weiterbildung der Erfindung lässt sich die jeweilige Ausdehnung (Breite) des Spaltes ermitteln, soweit zusätzlich die Laufzeit der Radarwellen zwischen deren Austritt aus dem Verschleißteil der Radarantenne bis zum Auftreffen auf der Gegenfläche ermittelt und als Maß für die Ausdehnung des zwischen der Verschleißschicht und der Gegenfläche bestehenden Spaltes definiert wird.

Bei Vorliegen der Werte für den an der Verschleißschicht eingetretenen Verschleiß sowie die Ausdehnung des Spaltes lässt sich auch ein im Bereich der Gegenfläche, also etwa an einer an einem Brechkegel ausgebildeten Verschleißschicht, eingetretener Verschleiß bestimmen, indem der an der Verschleißschicht zum Zeitpunkt einer Messung eingetretene Verschleiß einschließlich der zum Zeitpunkt der Messung geltenden Ausdehnung des Spaltes in ein Verhältnis zu den im Neuzustand der Zerkleinerungsmaschine vorgegebenen Abmessungen für VcrschlciBschicht und Spalt gesetzt und daraus ein an der die Gegenfläche bildenden Vcrschleißschicht des Brechkegels eingetretener Verschleiß ermittelt wird.

In der Zeichnung sind Ausführungsbeispiele der Erfindung wiedergegeben, welche nachstehend beschrieben sind. Es zeigen:
- Fig. 1: eine als Kreiselbrecher ausgebildete Zerkleinerungsmaschine in einer Perspektivdarstellung.
- Fig. 2: einen Ausschnitt aus einem Gehäusebereich des Kreiseibrechers mit darin integrierter Radarantenne in einer vergrößerten Darstellung,
- Fig. 3: den Gegenstand der Fig. 2 in einer abgewandelten Ausführungsform
- Fig. 4: die Radarantenne gemäß Fig. 2 bzw. 3 in einer vergrößerten Einzeldarstellung.

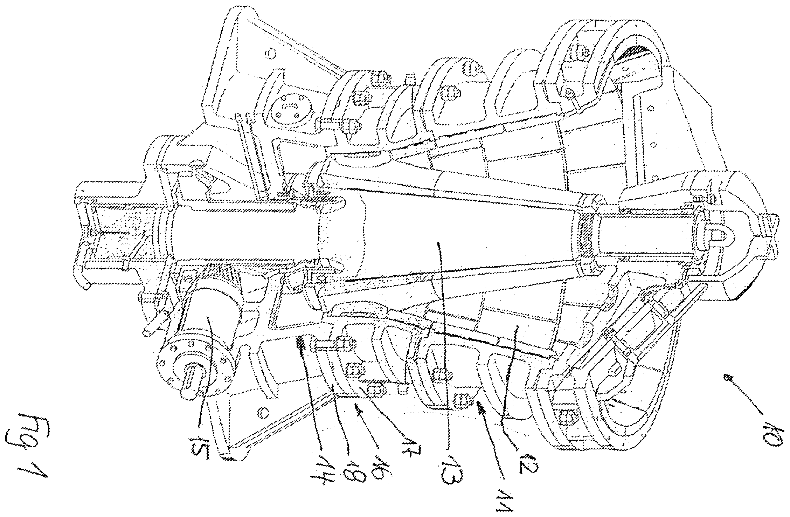

Soweit die Erfindung nachstehend anhand einer als Kreiselbrecher ausgebildeten Zerkleinerungsmaschine näher erläutert wird, entspricht die Fig. 1 der entsprechenden Darstellung in der genannten DE 198 53 900 A1. Der Kreiselbrecher 10 besteht aus einem Gehäuse 11, dessen Innenseite mit einer als Brechbacken bezeichneten Verschleißschicht 12 ausgekleidet ist. Im Innenraum des Gehäuses 11 ist ein eine Gegenfläche 35 zur Verschleißschicht 12 ausbildender Brechkegel 13 angeordnet, der auf einem Gehäuseunterteil 14 ruht und von einem Antrieb 15 angetrieben ist. Der Brechkegel 13 ist auf seiner Außenseite mit einer Verschleißschicht 20 versehen, deren Außenseite die Gegenfläche 35 ausbildet. Soweit die jeweils mit gegenläufiger Konizität ausgebildete Verschleißschicht 12 und Brechkegel 13 mit Verschleißschicht 20 an ihrer engsten Stelle einen Brechspalt ausbilden, liegt dieser Brechspalt in Höhe eines Flanschbereichs 16, der von einem einem oberen Gehäuseteil zuzurechnenden oberen Flanschteil 17 und einem dem Gehäuseunterteil 14 zuzurechnenden unteren Flanschteil 18 gebildet ist.

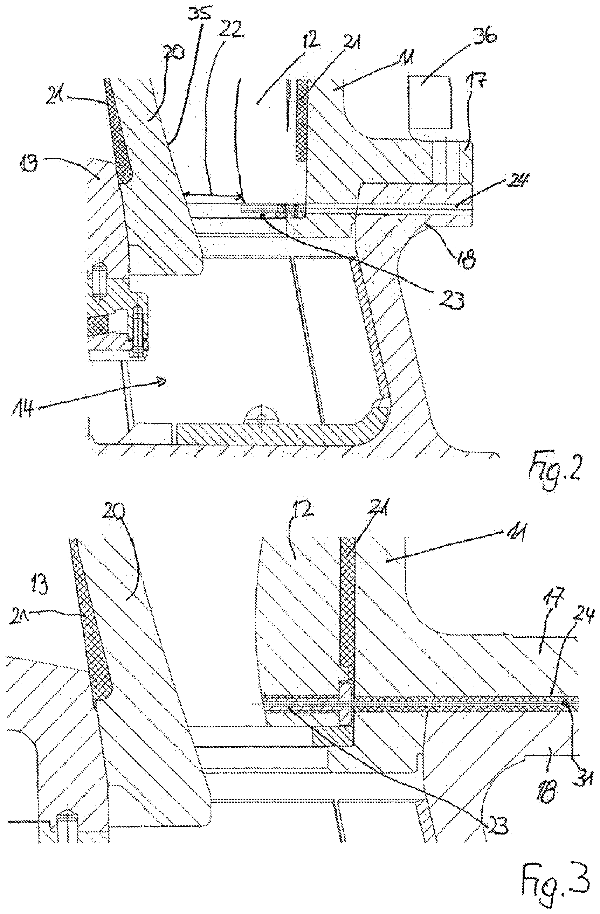

Soweit Fig. 2 einen Ausschnitt in einer vergrößerten Darstellung zeigt, bezieht sich dieser Ausschnitt auf die Ebene des Flanschbereiches 16, und so sind in Fig. 2 der obere Flanschteil 17 und der untere Flanschteil 18 zu erkennen. Es ist weiter erkennbar, dass die an der Innenseite des Gehäuses 11 angebrachte Verschleißschicht 12 auf das Gehäuse 11 unter Zwischenlage einer partiellen Vergussmasse 21 aufgebracht ist; gleiches gilt für die Anbringung der Verschleißschicht 20 an dem Brechkegel 13. An der engsten Stelle zwischen Verschleißschicht 20 des Brechkegels 13 sowie Verschleißschicht 12 des Gehäuses 11 ist ein Spalt 22 als Brechspalt definiert.

Bei dem in Fig. 2 dargestellten Ausführungsbeispiel ist eine im Folgenden in ihrem Aufbau noch zu beschreibende Radarantenne 23 unmittelbar unterhalb der Verschleißschicht 12 angeordnet, wobei in dem unteren Flanschteil 18 und dem anschließenden Teil des Gehäuses 11 eine Bohrung 24 eingebracht ist, durch welche die Radarantenne 23 bis in die dargestellte Stellung vorgeschoben werden kann. Hierzu kann vorgesehen sein, dass in der Verschleißschicht und/oder dem entsprechenden Gehäuse bereits kanalartige Aussparungen vorbereitet sind, die zur Aufnahme der Radarantenne und/oder eines Verbindungsrohrs dienen. Soweit die Radarantenne 23 an einen nicht weiter dargestellten und aus der Radartechnik bekannten Wellenleiter, insbesondere einen Hohlleiter angeschlossen ist, verläuft der Wellenleiter durch die Bohrung 24 bis nach außerhalb des Gehäuses 11 und ist hier an einen an geeigneter Stelle angebrachten, mit 36 angedeuteten Radarsensor angeschlossen.

Bei dem in Fig. 3 dargestellten Ausführungsbeispiel ist die entsprechende Bohrung 24 zur Aufnahme bzw. Durchführung der Radarantenne 23 in dem oberen Flanschteil 17 ausgebildet, was bedeutet, dass die Radarantenne 23 nun innerhalb der Verschleißschicht 12 angeordnet und in diese vollständig eingebettet ist. Wegen der größeren Erstreckung des zugeordneten Gehäusebereichs bzw. des oberen Flanschteils 17 ist hierbei vorgesehen, dass zwischen das Ende der Radarantenne 23 und dem hier nicht weiter dargestellten Wellenleiter eine zusätzliche Wellenleiterverlöngerung 31 eingesetzt ist, deren eines, vorderes Ende an die Radarantenne 23 gekoppelt ist und an deren hinteres Ende in einer nicht weiter dargestellten Ankopplung ein mit einem Radarsensor verbundener Wellenleiter angeschlossen ist.

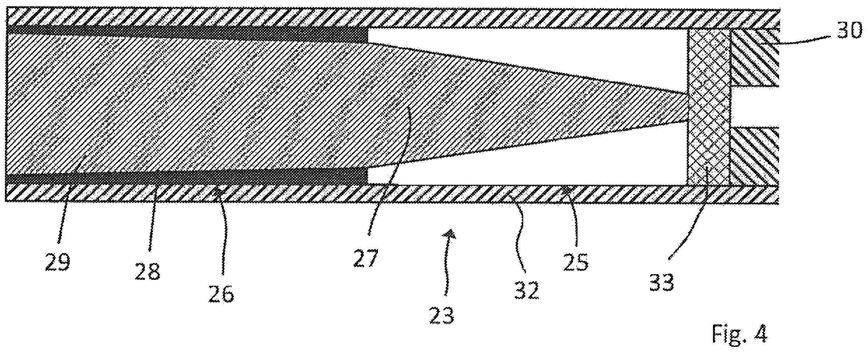

Der Aufbau der Radarantenne 23 im Einzelnen ist in Fig. 4 dargestellt. Danach besteht die Radarantenne 23 aus einem den mittleren Teil der Antennendarstellung bildenden Antennenbereich 25 und einem in der Darstellung links daran angesetzten Verschleißteil 26. Am äußeren rechten Ende des Antennenteils 25 ist ein Anschlussteil 30 für den nicht weiter dargestellten, einen runden Querschnitt aufweisenden Wellenleiter in Form eines Hohlleiters angeordnet. Zwischen dem Antennenbereich 25 und dem Anschlussteil 30 ist ein weiterer Obergangsbereich 33 angeordnet. Der Antennenbercich 25 der Radarantenne 23 besteht aus einer in der Radartechnik bekannten, mit einem geeignete dielektrische Eigenschaften aufweisenden Material gefüllten Hornantenne mit einem sich in Richtung des Verschleißteils 26 konisch erweiternden Querschnitt des Ausbreitungsbereichs 27 für die Radarwellen. Der Verschleißteil 26 weist gegenüber der Konizität des Ausbreitungsbereichs 27 des Antennenteils 25 nur noch eine geringfügige Konizität an seiner Wandung 28 auf und ist ebenfalls mit einem geeignete dielektrische Eigenschaften aufweisenden verschleißfesten Material 29 gefüllt. Hierfür kann eine geeignete Keramik zum Einsatz kommen. Damit soll unter anderem sichergestellt sein, dass die sich aus dem Antennenbereich 25 ausbreitenden Radarwellen beim Durchgang durch den Verschleißteil 26 keine ein Messergebnis verfälschende, dämpfende oder auslöschende Beeinflussung oder Reflektionen erfahren. Der Übergangsbereich 33 enthält eine in der Radartechnik bekannte Entspicgelung, die für einen weichen Übergang der Wellenausbreitung aus dem Anschlussteil 30 in den Antennenbereich 25 sorgt. Der Aufbau der Radarantenne 23 ist von einem äußeren Schutzrohr 32 umschlossen, welches als Metallrohr ausgebildet sein kann. Dieses Schutzrohr unterliegt ebenso wie das Verschleißteil 26 der Radarantenne 23 bei fortschreitendem Verschleiß der Verschleißschicht 12 einer entsprechenden Abrasion.

Je nach Aufbau bzw. Anordnung der Radarantenne 23 ergibt sich für einen beispielsweise als Pulsradar ausgebildeten Radarsensor eine zuordnenbare Laufzeit der Radarwellen bis zu einer jeweils an einer Grenzschicht eintretenden Reflektion. So lässt sich bei einem unmittelbaren Anschluss des Hohlleiters an den Antennenbereich 25 der Radarantenne 23 die Laufzeit der Radarwellen vom Radarsensor über den luftgefüllten Hohlleiter bis zum Eintritt in den Antennenbereich 25 ebenso bestimmen wie deren Laufzeit bis zum Austritt aus der Radarantenne an deren vorderer Endfläche des Verschleißteils 26 in das Medium Luft. Diese bei einem Pulsradar direkt messbare Laufzeitdifferenz stellt ein Maß für die zum Messzeitpunkt verbleibenden Lange der Radarantenne 23 bzw. des Verschleißteils 26 dar, und durch Vergleich mit der im Neuzustand der Zerkleinerungsmaschine vorgegebenen Lange von auch bei Verschleiß unverändert bleibendem Antennenbereich 25 sowie Verschleißteil 26 lässt sich die jeweils vorliegende aktuelle Materialstärke der Verschleißschicht 12 ermitteln und der zwischenzeitlich eingetretene Verschleiß feststellen.

Soweit die aus der Radarantenne 23 austretenden Radarwellen nach Durchlaufen des zum Messzeitpunkt bestehenden Spaltes 22 auf die an dem Brechkegel 13 befindliche Verschleißschicht 20 als Gegenfläche 35 treffen und von dieser reflektiert werden, lässt sich die Laufzeitdifferenz zwischen der Laufzeit der Radarwellen bis zum Austritt aus der Radarantenne 23 und der Laufzeit bis zum Auftreffen auf die Gegenfläche 35 an dem Brechkegel 13 ebenfalls bestimmen und aus dieser Laufzeitdifferenz lässt sich unmittelbar die Erstreckung des Spaltes 22 ableiten, die als Überwachungsgröße ebenfalls gewünscht ist.

Darüber hinaus ermöglicht dadurch die Erfindung über die Verscheißmessung an der vorzugsweise an der Innenwand einer Zerkleinerungsmaschine aufgebrachten Verschleißschicht 12 hinaus auch eine Bestimmung der Stärke der auf der Außenseite des Brechkegels 13 aufgebrachten Verschleißschicht 20 beziehungsweise des daran eingetretenen Verschleißes. Aufgrund der Kenntnis des an der Verschleißschicht 12 eingetretenen Verschleißes und der zum Messzeitpunkt gegebenen Ausdehnung des Spaltes 22 ist eine Rückrechnung bzgl. des an der Verschleißschicht 20 eingetretenen Verschleißes möglich, soweit die für den Neuzustand der Zerkleinerungsmaschine geltenden Abmessungen von Verschleißschicht 12 und Spalt 22 vorliegen und aufgrund der zum Messzeitpunkt eingetretenen Veränderungen der Stärke der Verschleißschicht 12 beziehungsweise der Ausdehnung des Spaltes 22 ebenfalls eine Berechnung der an der Verschleißschicht 20 des Brechkegels 13 eingetretenen Veränderung möglich ist.

Soweit ein frequenzmoduliertes Radar zum Einsatz kommt, gelten analog zu den Laufzeitunterschieden beim Pulsradar die entsprechend erfassbaren Frequenzunierschiede, die eine entsprechende Auswertung zulassen.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Zerkleinerungsmaschine wie Brecher (10), Mühle oder dergleichen, bei welcher das zu zerkleinernde Material durch einen zwischen wenigstens einer auf einen Bestandteil der Zerkleinerungsmaschine (10) aufgebrachten Verschleißschicht (12) und einer Gegenfläche (35) ausgebildeten und mit fortschreitendem Verschleiß der wenigstens einen Verschleißschicht (12) in seiner Erstreckung variierenden Spalt (22) geführt ist, **dadurch gekennzeichnet, dass** zur Bestimmung des an der Verschleißschicht (12) eintretenden Verschleißes und/oder zur Bestimmung der jeweils geltenden Erstreckung des Spaltes (22) zwischen Verschleißschicht (12) und Gegenfläche (35) eine auf die zugehörige Gegenfläche (35) ausgerichtete Radarantenne (23) zugeordnet ist, wobei die Radarantenne (23) einen Antennenbereich (25) und ein mindestens dem für einen zulässigen Verschleiß vorgesehenen Bereich der Verschleißschicht (12) zugeordnetes und sich mit dem Verschleiß der Verschleißschicht (12) jeweils verkürzendes Verschleißteil (26) umfasst.

2. Zerkleinerungsmaschine nach Anspruch 1, **dadurch gekennzeichnet, dass** das Verschleißteil (26) der Radarantenne (23) verglichen mit der konischen Gestalt des Antennenbereichs (25) eine sich geringfügig in Richtung auf die Gegenfläche erweiternde Konizität aufweist, wobei beim Durchgang der Radarwellen durch das Verschleißteil (26) die Antennenrichtwirkung erhalten bleibt und höhere Moden verhindert werden.

3. Zerkleinerungsmaschine nach Anspruch 2, **dadurch gekennzeichnet, dass** das Verschleißteil (26) aus einem verschleißfestem Material wie die Verschleißschicht (12) ausgebildet ist, welches für Radar dielektrische Eigenschaften aufweist.

4. Zerkleinerungsmaschine nach einem der Ansprüche 1 bis 3, **dadurch gekennzeichnet, dass** der Antennenbereich (25) der Radarantenne (23) als Hornantenne ausgebildet ist.

5. Zerkleinerungsmaschine nach Anspruch 4, **dadurch gekennzeichnet, dass** die Hornantenne eine mit einem dielektrische Eigenschaften aufweisenden Material gefüllte Hornantenne ist.

6. Zerkleinerungsmaschine nach einem der Ansprüche 1 bis 5, **dadurch gekennzeichnet, dass** die einzelnen Komponenten von Antennenbereich (25) und/oder Verschleißteil (26) der Radarantenne (23) jeweils miteinander verklebt, verlötet oder zementiert sind.

7. Zerkleinerungsmaschine nach einem der Ansprüche 1 bis 5, **dadurch gekennzeichnet, dass** die einzelnen Komponenten von Antennenbereich (25) und/oder Verschleißteil (26) der Radarantenne (23) gegeneinander beweglich angeordnet sind.

8. Zerkleinerungsmaschine nach einem der Ansprüche 1 bis 7, **dadurch gekennzeichnet, dass** die Radarantenne (23) in einem in die Verschleißschicht (12) eingebetteten, mit dem Abtrag der Verschteißschicht (12) verschleißenden Schutzrohr (32) untergebracht ist.

9. Zerkleinerungsmaschine nach einem der Ansprüche 1 bis 8, **dadurch gekennzeichnet, dass** die Radarantenne (23) mittels eines daran angeschlossenen Wellenleiters an einen Radarsensor angeschlossen ist.

10. Zerkleinerungsmaschine nach Anspruch 9 **dadurch gekennzeichnet, dass** der Radarsensor außerhalb des Zerkleinerungsraumes der Zerkleinerungsmaschine angeordnet ist.

11. Zerkleinerungsmaschine nach einem der Ansprüche 1 bis 10, **dadurch gekennzeichnet, dass** bei Gehäusen (11) zwischen einem an der Radarantenne ausgebildeten Flansch und dem Radarsensor eine Wellenleiterverlängerung (31) zwischengeschaltet ist.

12. Zerkleinerungsmaschine nach Anspruch 11, **dadurch gekennzeichnet, dass** zur Erzeugung eines weichen Übergangs der Radarwellen zwischen zwei unterschiedlichen Materialien an dem Übergang vom Wellenleiter zum Antennenbereich (25) der Radarantenne ein aus einem Übergangsmaterial bestehender und zur Entspiegelung eingesetzter Übergangsbereich (33) angeordnet ist.

13. Zerkleinerungsmaschine nach einem der Ansprüche 1 bis 12, **dadurch gekennzeichnet, dass** die Radarantenne (23) vollständig in die Verschleißschicht (12) eingebettet ist.

14. Zerkleinerungsmaschine nach einem der Ansprüche 1 bis 13, **dadurch gekennzeichnet, dass** in der Verschleißschicht (12) und/oder einem Gehäuseteil kanalartige Aussparungen zur Aufnahme der Radarantenne (23) und/oder der Wellenleiterverlängerung (31) und/oder des Radarsensors angeordnet sind.

15. Verfahren zum Betreiben einer nach einem der Ansprüche 1 bis 13 eingerichteten Zerkleinerungsmaschine, bei welchem in einer Auswerteeinheit die Laufzeitdifferenz der in die aus Antennenbereich (25) und Verschleißteil (26) bestehende Radarantenne (23) eingespeisten Radarwellen zwischen deren Eintritt in den Antennenbereich (25) und deren Austritt aus dem Verschleißteil (26) bestimmt und in ein Verhältnis zu der im Neuzustand der Zerkleinerungsmaschine vorgegebenen Länge von unverändert bleibendem Antennenbereich (25) und dem einem Verschleiß unterliegenden Verschleißteil (26) gesetzt und daraus der zum Zeitpunkt der Messung jeweils eingetretene Verschleiß der Verschleißschicht (12) bestimmt wird.

16. Verfahren nach Anspruch 15, bei welchem zusätzlich die Laufzeit der Radarwellen zwischen deren Austritt aus dem Verschleißteil (26) der Radarantenne (23) bis zum Auftreffen auf der Gegenfläche (35) ermittelt und als Maß für die Ausdehnung des zwischen der Verschleißschicht (12) und der Gegenfläche (35) bestehenden Spaltes (22) definiert wird.

17. Verfahren nach Anspruch 16, bei welchem der an der Verschleißschicht (12) zum Zeitpunkt einer Messung eingetretene Verschleiß einschließlich der zum Zeitpunkt der Messung geltenden Ausdehnung des Spaltes (22) in ein Verhältnis zu den im Neuzustand der Zerkleinerungsmaschine vorgegebenen Abmessungen für Verschleißschicht (12) und Spalt (22) gesetzt und daraus ein an der die Gegenfläche (35) bildenden Verschleißschicht (20) des Brechkegels (13) eingetretener Verschleiß ermittelt wird.

## Claims

1. Comminuting machine such as a crusher (10), mill or the like, in which the material to be comminuted is guided through a gap (22) formed between at least one wear layer (12) applied to a component part of the comminuting machine (10) and a counter-surface (35), the extent of said gap varying as the at least one wear layer (12) progressively wears, **characterized in that** a radar antenna (23) oriented towards the associated counter-surface (35) is assigned for determining the wear occurring at the wear layer (12) and/or for determining the respectively applicable extent of the gap (22) between wear layer (12) and counter-surface (35), wherein the radar antenna (23) comprises an antenna region (25) and a wear part (26) assigned to at least that region of the wear layer (12) which is provided for permissible wear, said wear part becoming shorter in each case with the wear of the wear layer (12).

2. Comminuting machine according to Claim 1, **characterized in that** the wear part (26) of the radar antenna (23) comprises a conicity that expands slightly in a direction toward the counter-surface in comparison with the conical shape of the antenna region (25), wherein as the radar waves pass through the wear part (26), the antenna directivity is maintained and higher modes are prevented.

3. Comminuting machine according to Claim 2, **characterized in that** the wear part (26) is formed from a wear-resistant material like the wear layer (12), said material comprising dielectric properties for radar.

4. Comminuting machine according to any of Claims 1 to 3, **characterized in that** the antenna region (25) of the radar antenna (23) is embodied as a horn antenna.

5. Comminuting machine according to Claim 4, **characterized in that** the horn antenna is a horn antenna filled with a material comprising dielectric properties.

6. Comminuting machine according to any of Claims 1 to 5, **characterized in that** the individual components of the antenna region (25) and/or the wear part (26) of the radar antenna (23) are in each case adhesively bonded, soldered or cemented to one another.

7. Comminuting machine according to any of Claims 1 to 5, **characterized in that** the individual components of the antenna region (25) and/or the wear part (26) of the radar antenna (23) are arranged so as to be movable relative to one another.

8. Comminuting machine according to any of Claims 1 to 7, **characterized in that** the radar antenna (23) is accommodated in a protective pipe (32) embedded into the wear layer (12), said protective pipe wearing as the wear layer (12) is eroded.

9. Comminuting machine according to any of Claims 1 to 8, **characterized in that** the radar antenna (23) is connected to a radar sensor by means of a waveguide connected to said radar antenna.

10. Comminuting machine according to Claim 9, **characterized in that** the radar sensor is arranged outside the comminuting space of the comminuting machine.

11. Comminuting machine according to any of Claims 1 to 10, **characterized in that** in the case of housings (11) a waveguide extension (31) is interposed between a flange formed at the radar antenna and the radar sensor.

12. Comminuting machine according to Claim 11, **characterized in that** a transition region (33) consisting of a transition material and used for anti-reflection is arranged in order to produce a soft transition of the radar waves between two different materials at the transition from the waveguide to the antenna region (25) of the radar antenna.

13. Comminuting machine according to any of Claims 1 to 12, **characterized in that** the radar antenna (23) is completely embedded into the wear layer (12) .

14. Comminuting machine according to any of Claims 1 to 13, **characterized in that** channel-like cutouts for receiving the radar antenna (23) and/or the waveguide extension (31) and/or the radar sensor are arranged in the wear layer (12) and/or a housing part.

15. Method for operating a comminuting machine configured according to any of Claims 1 to 13, wherein, in an evaluation unit, the propagation time difference of the radar waves fed into the radar antenna (23), consisting of antenna region (25) and wear part (26), between the entry of said radar waves into the antenna region (25) and the exit of said radar waves from the wear part (26) is determined and is put into a relationship with the length of the antenna region (25) remaining unchanged and the wear part (26) subject to wear, said length being predefined in the new state of the comminuting machine, and the wear of the wear layer (12) that has occurred in each case at the time of the measurement is determined from this.

16. Method according to Claim 15, wherein the propagation time of the radar waves between the exit thereof from the wear part (26) of the radar antenna (23) and the impingement on the counter-surface (35) is additionally ascertained and defined as a measure of the extent of the gap (22) existing between the wear layer (12) and the counter-surface (35).

17. Method according to Claim 16, wherein the wear that has occurred at the wear layer (12) at the time of a measurement, including the extent of the gap (22) applicable at the time of the measurement, is put into a relationship with the dimensions for the wear layer (12) and the gap (22), said dimensions being predefined in the new state of the comminuting machine, and a wear that has occurred at the wear layer (20) of the crushing cone (13), said wear layer forming the counter-surface (35), is ascertained from this.

## Revendications

1. Machine de broyage telle que broyeur (10), moulin ou similaire, dans laquelle le matériau à broyer est guidé à travers un interstice (22) formé entre au moins une couche d'usure (12) appliquée sur un élément constitutif de la machine de broyage (10) et une surface opposée (35) et dont l'étendue varie au fur et à mesure que l'usure de ladite au moins une couche d'usure (12) progresse, **caractérisée en ce qu'**une antenne de radar (23) orientée vers la surface opposée (35) associée est associée pour la détermination de l'usure se produisant au niveau de la couche d'usure (12) et/ou pour la détermination de l'étendue respectivement prévalente de l'interstice (22) entre la couche d'usure (12) et la surface opposée (35), l'antenne de radar (23) comportant une région d'antenne (25) et une partie d'usure (26) associée au moins à la région de la couche d'usure (12) prévue pour une usure admissible et se raccourcissant respectivement au fur et à mesure de l'usure de la couche d'usure (12).

2. Machine de broyage selon la revendication 1, **caractérisée en ce que** la partie d'usure (26) de l'antenne de radar (23) présente, par comparaison avec la forme conique de la région d'antenne (25), une conicité s'élargissant légèrement en direction de la surface opposée, la directivité de l'antenne étant maintenue et des modes supérieurs étant empêchés lors du passage des ondes radar à travers la partie d'usure (26) .

3. Machine de broyage selon la revendication 2, **caractérisée en ce que** la partie d'usure (26) est formée à partir d'un matériau résistant à l'usure tel que celui de la couche d'usure (12), lequel présente des propriétés diélectriques pour un radar.

4. Machine de broyage selon l'une des revendications 1 à 3, **caractérisée en ce que** la région d'antenne (25) de l'antenne de radar (23) est réalisée en tant qu'antenne cornet.

5. Machine de broyage selon la revendication 4, **caractérisée en ce que** l'antenne cornet est une antenne cornet remplie d'un matériau présentant des propriétés diélectriques.

6. Machine de broyage selon l'une des revendications 1 à 5, **caractérisée en ce que** les composants individuels de la région d'antenne (25) et/ou de la partie d'usure (26) de l'antenne de radar (23) sont respectivement collés, brasés ou cimentés les uns aux autres.

7. Machine de broyage selon l'une des revendications 1 à 5, **caractérisée en ce que** les composants individuels de la région d'antenne (25) et/ou de la partie d'usure (26) de l'antenne de radar (23) sont disposés de manière mobile les uns par rapport aux autres.

8. Machine de broyage selon l'une des revendications 1 à 7, **caractérisée en ce que** l'antenne de radar (23) est introduite dans un tube protecteur (32) encastré dans la couche d'usure (12) et s'usant au fur et à mesure de l'usure de la couche d'usure (12).

9. Machine de broyage selon l'une des revendications 1 à 8, **caractérisée en ce que** l'antenne de radar (23) est connectée à un capteur radar au moyen d'un guide d'ondes connecté à celle-ci.

10. Machine de broyage selon la revendication 9, **caractérisée en ce que** le capteur radar est disposé à l'extérieur de l'espace de broyage de la machine de broyage.

11. Machine de broyage selon l'une des revendications 1 à 10, **caractérisée en ce que**, dans des boîtiers (11), un prolongement de guide d'ondes (31) est interposé entre une bride formée au niveau de l'antenne de radar et le capteur radar.

12. Machine de broyage selon la revendication 11, **caractérisée en ce qu'**une région de transition (33) constituée d'un matériau de transition et utilisée pour l'anti-réfléchissement est disposée pour produire une transition douce des ondes radar entre deux matériaux différents au niveau de la transition du guide d'onde à la région d'antenne (25) de l'antenne de radar.

13. Machine de broyage selon l'une des revendications 1 à 12, **caractérisée en ce que** l'antenne de radar (23) est encastrée complètement dans la couche d'usure (12).

14. Machine de broyage selon l'une des revendications 1 à 13, **caractérisée en ce que** des évidements en forme de canaux servant à recevoir l'antenne de radar (23) et/ou le prolongement de guide d'ondes (31) et/ou le capteur radar sont disposés dans la couche d'usure (12) et/ou une partie de boîtier.

15. Procédé de fonctionnement d'une machine de broyage conçue selon l'une des revendications 1 à 13, dans lequel la différence de temps de propagation des ondes radar injectées dans l'antenne de radar (23) constituée de la région d'antenne (25) et de la partie d'usure (26) entre leur entrée dans la région d'antenne (25) et leur sortie de la partie d'usure (26) est déterminée dans une unité d'évaluation et est mise en relation avec la longueur de la région d'antenne (25) demeurant inchangée et de la partie d'usure (26) soumise à une usure, laquelle longueur est prédéfinie dans l'état neuf de la machine de broyage, et, à partir de cela, l'usure de la couche d'usure (12) respectivement survenue à l'instant de la mesure est déterminée.

16. Procédé selon la revendication 15, dans lequel en outre le temps de propagation des ondes radar entre leur sortie de la partie d'usure (26) de l'antenne de radar (23) et leur incidence sur la surface opposée (35) est déterminé et est défini en tant que mesure de l'étendue de l'interstice (22) présent entre la couche d'usure (12) et la surface opposée (35).

17. Procédé selon la revendication 16, dans lequel l'usure survenue au niveau de la couche d'usure (12) à l'instant d'une mesure, y compris l'étendue de l'interstice (22) prévalente à l'instant de la mesure, est mise en relation avec les dimensions de la couche d'usure (12) et de l'interstice (22) prédéfinies dans l'état neuf de la machine de broyage et, à partir de cela, une usure survenue au niveau de la couche d'usure (20) du cône broyeur (13) formant la surface opposée (35) est déterminée.
